# EUROPEAN PATENT APPLICATION

(11) **EP 4 807 049 A1**
(43) Date of publication of application: **16.09.2026**
(21) Application number: 24926993.7
(22) Date of filing: 09.12.2024
(51) Int. Cl.: C25B 15/021, C25B 1/04, C25B 9/00

(54) **OPERATION METHOD FOR ELECTROLYSIS DEVICE, CONTROL DEVICE FOR ELECTROLYSIS DEVICE, AND ELECTROLYSIS SYSTEM**

(30) Priority: 29.02.2024 JP 2024029947
(71) Applicant: MITSUBISHI HEAVY INDUSTRIES, LTD., Tokyo 100-8332 (JP)
(72) Inventor: Matsuo, Satoru, Tokyo 100-8332 (JP); Ide, Mitsunari, Tokyo 100-8332 (JP)
(74) Representative: Studio Torta S.p.A.
(86) International application number: PCT/JP2024/043483
(87) International publication number: WO 2025/182228

(57) **Abstract**

Provided are an operation method of an electrolyzer, a controller of an electrolyzer, and an electrolysis system that can quickly reach a rated load. An operation method of an electrolyzer (100) including a temperature controller (30) configured to regulate a temperature of an electrolyte solution supplied to a cellstack (40), the cellstack (40) configured to electrolyze the electrolyte solution supplied via the temperature controller (30), and a gas-liquid separator (20) configured to separate a gas and a liquid from each other that are generated by the cellstack (40) includes: supplying hot water to the temperature controller (30) in a case of a stopped state where the electrolyzer (100) is stopped.

## Description

### [Technical Field]

The present disclosure relates to an operation method of an electrolyzer, a controller of an electrolyzer, and an electrolysis system.

### [Background Art]

Improvement of energy efficiency has been studied for electrolyzers, in particular, water electrolyzers. For example, Patent Literature 1 discloses that, to increase the energy efficiency during startup of the water electrolyzer, hot water heated by using heat recovered from a power generator is stored, and the heat of the hot water is supplied as make-up water for a water electrolyzer.

### [Citation List]

### [Patent Literature]

[PTL 1]
Japanese Patent Application Laid-Open No. 2006-299322

### [Summary of Invention]

### [Technical Problem]

However, the art of Patent Literature 1 only studies how to increase the temperature of make-up water during startup but does not study the same for a stop period of the water electrolyzer. There is a problem as follows. While it is required to increase the temperature of the electrolyte solution (water) of the water electrolyzer up to an operation temperature (rated temperature) for an operation period at a rated load during startup, it takes time to increase the temperature because the temperature decreases during a stop period.

The present disclosure has been made in view of such circumstances and intends to provide an operation method of an electrolyzer, a controller of an electrolyzer, and an electrolysis system that can quickly reach a rated load.

### [Solution to Problem]

To solve the above problem, an operation method of an electrolyzer, a controller an electrolyzer, and an electrolysis system of the present disclosure employ the following solutions.

The operation method of the electrolyzer of the present disclosure is an operation method of an electrolyzer including a temperature controller configured to regulate a temperature of an electrolyte solution supplied to a cellstack, the cellstack configured to electrolyze the electrolyte solution supplied via the temperature controller, and a gas-liquid separator configured to separate a gas and a liquid from each other, the gas and the liquid being generated by the cellstack, and the operation method includes: supplying hot water to the temperature controller in a case of a stopped state where the electrolyzer is stopped.

The controller of the electrolyzer of the present disclosure is a controller of an electrolyzer including a temperature controller configured to regulate a temperature of an electrolyte solution supplied to a cellstack, the cellstack configured to electrolyze the electrolyte solution supplied via the temperature controller, and a gas-liquid separator configured to separate a gas and a liquid from each other, the gas and the liquid being generated by the cellstack, and the controller performs control to supply hot water to the temperature controller in a case of a stopped state where the electrolyzer is stopped.

The electrolysis system of the present disclosure includes: an electrolyzer including a temperature controller configured to regulate a temperature of an electrolyte solution supplied to a cellstack, the cellstack configured to electrolyze the electrolyte solution supplied via the temperature controller, and a gas-liquid separator configured to separate a gas and a liquid from each other, the gas and the liquid being generated by the cellstack; a hydrogen storage facility configured to store hydrogen produced by the electrolyzer; and an electric power generation configured to generate power by using the hydrogen stored in the hydrogen storage facility, and hot water generated by using an exhaust gas from the electric power generation is supplied to the temperature controller or the gas-liquid separator of the electrolyzer.

### [Advantageous Effects of Invention]

According to the present disclosure, hot water is supplied to the temperature controller, and thereby a reduction in temperature of the electrolyte solution can be prevented when the electrolyzer is stopped. Suppression of the reduction in temperature makes it possible to quickly increase the temperature during the next startup and shorten the startup time. Furthermore, since the temperature of the overall electrolyzer is maintained, the efficiency during startup can be improved, and the electrolyzer can quickly reach the rated load and produce more hydrogen.

### [Brief Description of Drawings]

[Fig. 1]

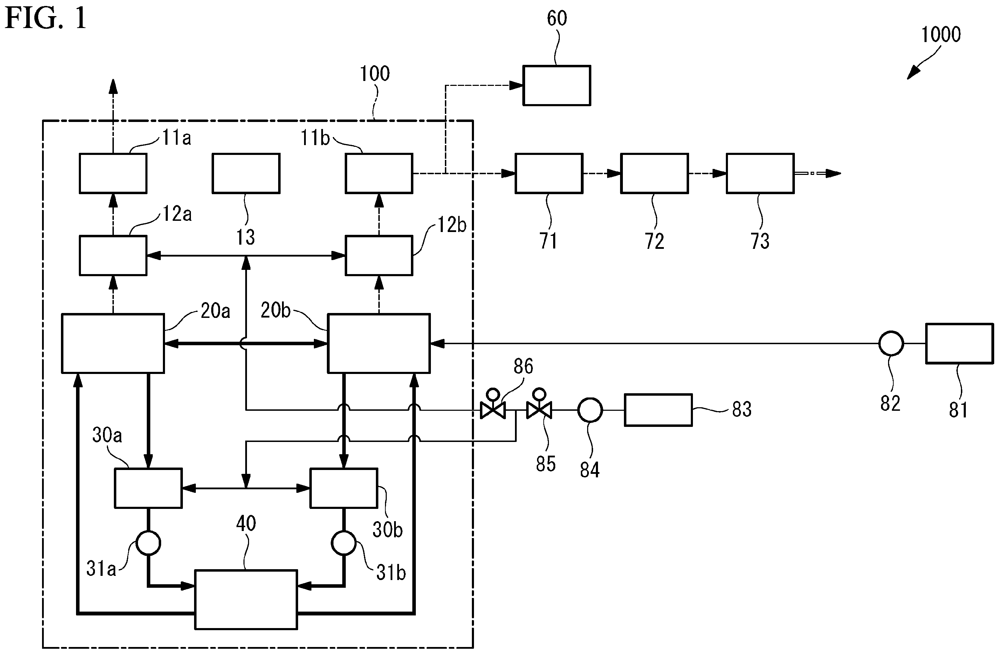

   Fig. 1 is a diagram illustrating an overview of an electrolysis system as a conventional example.
[Fig. 2]

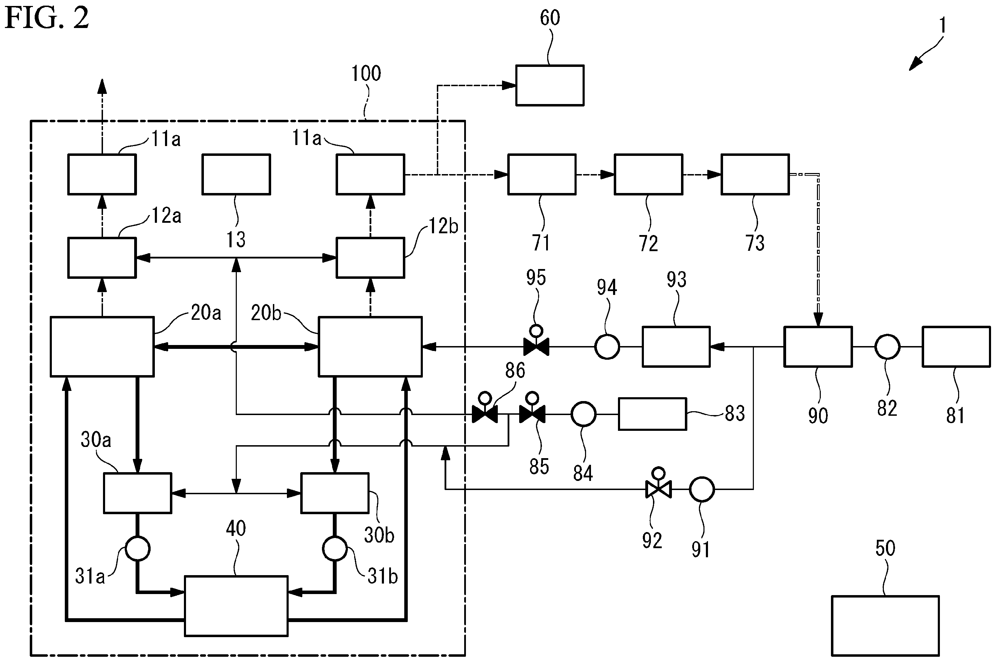

   Fig. 2 is a diagram illustrating an overview of an electrolysis system according to some embodiments of the present disclosure.
[Fig. 3]

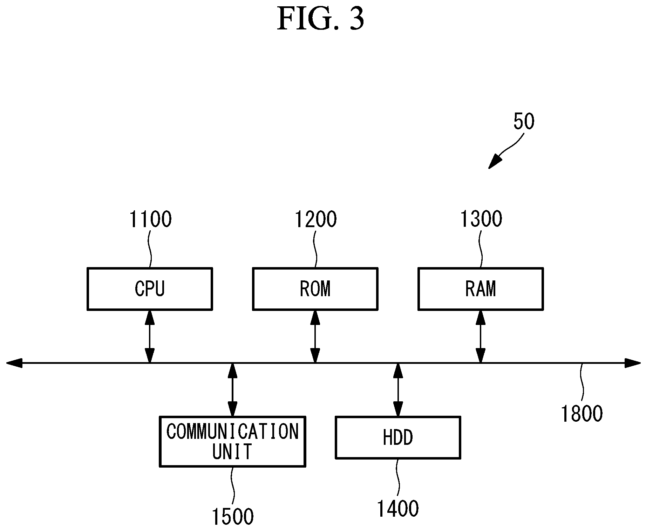

   Fig. 3 is a diagram illustrating an example of a hardware configuration of a controller according to some embodiments of the present disclosure.
[Fig. 4]

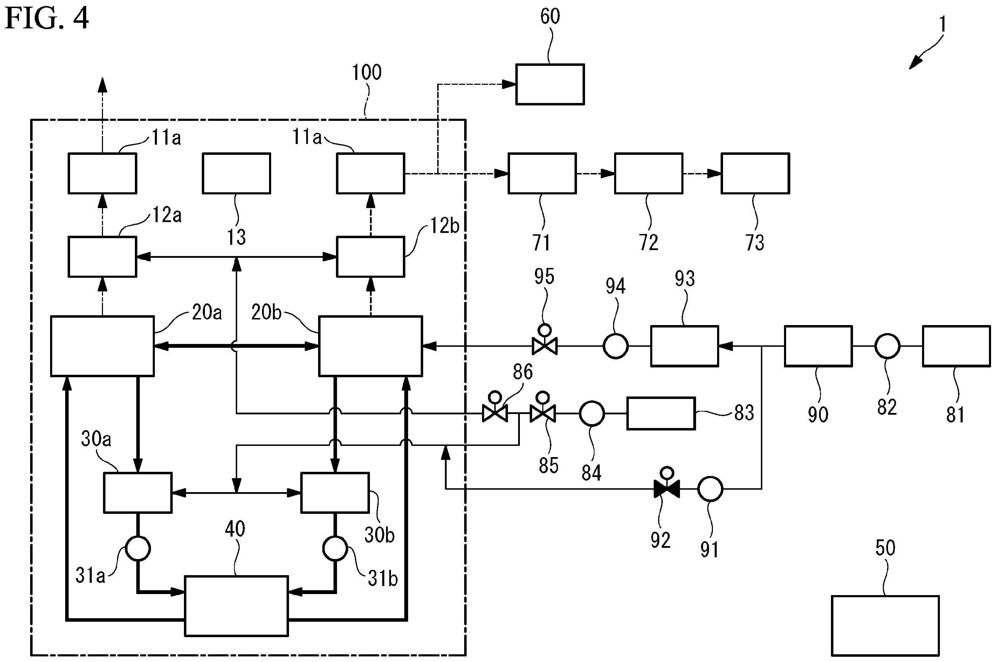

   Fig. 4 is a diagram illustrating an overview of the electrolysis system according to some embodiments of the present disclosure.

### [Description of Embodiments]

One embodiment of an operation method of an electrolyzer, a controller of an electrolyzer, and an electrolysis system according to the present disclosure will be described below with reference to the drawings.

Fig. 1 is a diagram illustrating an overview of an electrolysis system as a conventional example.

As illustrated in Fig. 1, an electrolysis system 1000 mainly includes an electrolyzer 100, a dryer 71, a hydrogen storage facility 72, an electric power generation 73, a pure water device 81, and a cooling tower (radiator) 83.

The electrolyzer 100 mainly includes gas-liquid separators (separators) 20a and 20b, temperature controllers 30a and 30b, and a cellstack 40.

In Fig. 1, bold lines represent electrolyte solutions, solid lines represent pure water or cooling water, dashed lines represent hydrogen, two-dot chain lines represent oxygen, and bold one-dot chain lines represent exhaust gases.

The electrolyzer 100 performs, for example, alkaline water electrolysis by the cellstack 40 and is a device configured to electrolyze water contained in an electrolyte solution (LYE) to generate hydrogen when a DC voltage is applied to the electrolyzer 100.

An electrolyte solution at a temperature regulated by the temperature controllers (LYE coolers) 30 (a temperature controller (oxygen side temperature controller) 30a and a temperature controller (hydrogen side temperature controller) 30b) is supplied to the cellstack 40 via circulation pumps 31 (a circulation pump (oxygen side circulation pump) 31a and a circulation pump (hydrogen side circulation pump) 31b). Electrolysis is performed in the cellstack 40, hydrogen and the electrolyte solution are supplied to the gas-liquid separator 20b, and oxygen and the electrolyte solution are supplied to the gas-liquid separator 20a.

The gas-liquid separator 20b separates hydrogen and the electrolyte solution from each other to supply the hydrogen to a cooler 12b and supply the electrolyte solution to the hydrogen side temperature controller 30b.

The gas-liquid separator 20a separates oxygen and the electrolyte solution from each other to supply the oxygen to a cooler 12a and supply the electrolyte solution to the oxygen side temperature controller 30a.

The cooler 12b cools hydrogen and supplies the hydrogen to a drum 11b. Further, the cooler 12a cools oxygen and supplies the oxygen to a drum 11a.

The drum 11b removes liquid droplets (moisture) contained in supplied hydrogen and supplies the hydrogen to the dryer 71. Since water or impurities may be contained in the discharge from the drum 11b during startup or the like, the discharge from the drum 11b is discharged externally via a hydrogen vent pipe 60. Once the discharge from the drum 11b is in good condition where the discharge primary consists of hydrogen, the place to discharge is switched from the hydrogen vent pipe 60 to the dryer 71.

The drum 11a removes liquid droplets (moisture) contained in supplied oxygen. This oxygen is discharged externally.

The dryer 71 performs dehumidification, deoxygenation, or the like on hydrogen and supplies only hydrogen to the hydrogen storage facility 72.

The hydrogen storage facility 72 stores hydrogen generated by electrolysis. When the electric power generation 73 generates power, the hydrogen storage facility 72 supplies hydrogen to the electric power generation 73.

The electric power generation 73 generates power by using hydrogen. In the power generation, an exhaust gas at about 100 °C is discharged externally.

When cooling is performed at the temperature controller 30 described above, cooling water is supplied from a cooling tower (radiator) 83 via a cooling water pump 84 and an on-off valve 85. The cooling water supplied from the cooling tower 83 is not used as the electrolyte solution but used for temperature adjustment (cooling) of the electrolyte solution passing through the temperature controller 30.

When cooling is performed at the cooler 12 described above, cooling water is supplied from a cooling tower 83 via a cooling water pump 84, an on-off valve 85, and an on-off valve 86. Also in such a case, the cooling water supplied from the cooling tower 83 is not used as the electrolyte solution but used for temperature adjustment (cooling) of the hydrogen gas and the oxygen gas passing through the cooler 12.

The gas-liquid separator 20b described above is supplied with pure water used as the electrolyte solution from the pure water device 81 via a pure water pump 82.

A gas analyzer 13 is installed in the electrolyzer 100. The gas analyzer 13 performs measurement on the internal of piping inside the electrolyzer 100 and measures the oxygen concentration or the impurity concentration.

In the following description, when respective drums 11, respective coolers 12, respective gas-liquid separators 20, respective temperature controllers 30, and respective circulation pumps 31 are distinguished from each other in the same terms, either "a" or "b" is appended thereto, and when respective drums 11, respective coolers 12, respective gas-liquid separators 20, respective temperature controllers 30, and respective circulation pumps 31 are not distinguished from each other in the same terms, "a" or "b" is omitted.

In the electrolyzer 100 of the present disclosure, renewable energy from solar power generation, wind power generation, or the like can be used for electric power used for electrolysis of water, but the present disclosure is not limited thereto. In the electrolysis of water using renewable energy, when the electric energy from the renewable energy is surplus, hydrogen is produced in the electrolyzer 100 and stored in the hydrogen storage facility 72. When the electric energy from the renewable energy is unavailable, power is generated by the electric power generation 73 by using hydrogen stored in the hydrogen storage facility 72.

In the case of the electrolysis system 1000 as the conventional example, the operation temperature (rated temperature) of the electrolyte solution during rated operation is about 90 °C, for example. The temperature of the electrolyte solution decreases when the electrolyzer 100 is stopped. Thus, when the electrolysis system 1000 is started up, it takes about 1.5 hours to increase the temperature of the electrolyte solution from the normal temperature to the rated temperature (for example, 90 °C).

In the electrolysis system 1000 as the conventional example, an electrolysis reaction proceeds both during startup and during load increase, and hydrogen is generated. Since electrolysis is performed in the cellstack 40, water is decomposed and runs short, and it is thus required to supply pure water as make-up water from the pure water device 81. Since the make-up water from the pure water device 81 is at the normal temperature, the time taken to increase the temperature may be longer.

As described above, in the electrolysis system 1000 as the conventional example, it takes time to reach rated operation during load increase, in particular, during startup.

An electrolysis system 1 of the embodiment of the present disclosure is configured to be able to quickly reach the rated operation.

Fig. 2 is a diagram illustrating an overview of an electrolysis system according to some embodiments of the present disclosure.

The present embodiment differs from the conventional example described above in that a heat exchanger 90 and a hot-water tank 93 are provided and is the same as the conventional example in other respects. Herein, features different from those of the conventional example will be mainly described, and duplicated description for the same elements as those in the conventional example will be omitted.

The same elements as those in the conventional example are labeled with the same references.

In Fig. 2, bold lines represent electrolyte solutions, solid lines represent pure water or cooling water, dashed lines represent hydrogen, two-dot chain lines represent oxygen, and bold one-dot chain lines represent exhaust gases.

As illustrated in Fig. 2, the electrolysis system 1 includes the heat exchanger 90, a hot-water pump 91, an on-off valve 92, a hot-water tank 93, a hot-water pump 94, an on-off valve 95, and a controller 50.

The heat exchanger 90 is supplied with an exhaust gas discharged from the electric power generation 73. Further, the heat exchanger 90 is supplied with pure water from the pure water device 81, performs heat exchange between the pure water and the exhaust gas discharged from the electric power generation 73, and increases the temperature of the pure water to make hot water. The hot water is supplied from the heat exchanger 90 to the hot-water pump 91 and the hot-water tank 93.

The hot water supplied from the heat exchanger 90 via the hot-water pump 91 and the on-off valve 92 is added to cooling water supplied from the cooling tower 83 to the temperature controller 30 to heat the cooling water.

The hot water supplied from the heat exchanger 90 to the hot-water tank 93 is temporarily stored in the hot-water tank 93 and then supplied to the gas-liquid separator 20b via the hot-water pump 94 and the on-off valve 95.

The controller 50 performs control of the electrolysis system 1 in accordance with the state of operation of the electrolysis system 1.

Fig. 3 is a diagram illustrating an example of a hardware configuration of a controller according to some embodiments of the present disclosure.

As illustrated in Fig. 3, the controller 50 is a computer system (calculator system) and includes, for example, a central processing unit (CPU: processor) 1100, a secondary storage device (ROM, secondary storage: memory) 1200, a main storage device (RAM, main memory) 1300, a hard disk drive (HDD) 1400 as a mass storage device, and a communication unit 1500 for connection to a network or the like. As the mass storage device, a solid state drive (SSD) may be used. These components are connected to each other via a bus 1800.

The CPU 1100 controls the entire controller 50 by using operating system (OS) stored in the secondary storage device 1200 connected via the bus 1800, for example, and executes various programs stored in the secondary storage device 1200 to perform various processes. One or a plurality of CPUs 1100 are provided and may implement a process in cooperation with each other.

The main storage device 1300 is formed of a writable memory such as a cache memory, a random access memory (RAM), or the like, for example, and is used as a working area where loading of an execution program for the CPU 1100, writing of processing data by the execution program, or the like are performed.

The secondary storage device 1200 is a non-transitory computer readable storage medium. The secondary storage device 1200 may be, for example, a magnetic disk, a magneto-optical disk, a CD-ROM, a DVD-ROM, a semiconductor memory, or the like. An example of the secondary storage device 1200 may be a read only memory (ROM), a hard disk drive (HDD), a solid state drive (SSD), a flash memory, or the like. For example, the secondary storage device 1200 stores the OS used for controlling the entire information processing device, such as Windows (registered trademark), iOS (registered trademark), Android (registered trademark), or the like, basic input/output system (BIOS), various device driver for hardware operation of peripheral devices, various application software, and various data or files or the like. The secondary storage device 1200 stores programs used for implementing various processes and various data required for implementing various processes. A plurality of secondary storage devices 1200 may be provided, and the programs or data as described may be divided and stored in respective secondary storage devices 1200.

The controller 50 may include an input unit formed of a keyboard, a mouse, or the like, a display unit formed of a liquid crystal display device, or the like to display data, or the like. The controller 50 may include the display unit and have a notification unit such as a lamp, a speaker configured to output a sound, in particular, an alarm sound, or the like.

A series of processes for implementing functions of the controller 50 are stored in the secondary storage device 1200 or the like in a form of a program as an example, and various functions are implemented when the CPU (processor) 1100 loads the program into the main storage device 1300 and performs modification and calculation processes on information. For the program, a form of being installed in advance in the secondary storage device 1200, a form of being provided in a state of being stored in another non-transitory computer readable storage medium, a form of being delivered via a wired or wireless communication connection, or the like may be applied. An example of the non-transitory computer readable storage medium may be a magnetic disk, a magneto-optical disk, a CD-ROM, a DVD-ROM, a semiconductor memory, or the like.

Fig. 4 is a diagram illustrating an overview of the electrolysis system according to some embodiments of the present disclosure. Fig. 2 described above illustrates a case where the electric energy from renewable energy is unavailable in the electrolysis system 1, and Fig. 4 illustrates a case where the electric energy from the renewable energy is surplus.

In Fig. 2 and Fig. 4, bold lines represent electrolyte solutions, solid lines represent pure water or cooling water, dashed lines represent hydrogen, two-dot chain lines represent oxygen, and bold one-dot chain lines represent exhaust gases.

### [When electric energy from renewable energy is unavailable]

As illustrated in Fig. 2, when the electric energy from renewable energy is unavailable, hydrogen stored in the hydrogen storage facility 72 is used to generate power at the electric power generation 73. Further, since the power supply using the renewable energy to the electrolyzer 100 is no longer available, the electrolyzer 100 is also stopped into a stopped state. In the electrolyzer 100 in the stopped state, only the circulation pump 31 is operated.

In such a case, under the control of the controller 50, the on-off valve 95, the on-off valve 85, and the on-off valve 86 are closed, and the on-off valve 92 is opened.

Hydrogen generated during the electrolyzer 100 being in operation has been stored in the hydrogen storage facility 72. When the electric energy from the renewable energy is unavailable, the electric power generation 73 generates power by using hydrogen stored in the hydrogen storage facility 72.

In the power generation of the electric power generation 73, an exhaust gas at about 100 °C is discharged. In the embodiment of the present disclosure, the exhaust gas from the electric power generation 73 is supplied to the heat exchanger 90 as indicated by the bold one-dot chain line.

The heat exchanger 90 performs heat exchange between pure water supplied from the pure water device 81 via the pure water pump 82 and the exhaust gas and generates hot water.

The hot water discharged from the heat exchanger 90 is partially supplied to the hot-water tank 93. Since the on-off valve 95 is closed, the hot water is stored in the hot-water tank 93. In such a way, the temperature of make-up water supplied to the gas-liquid separator 20 can be increased in advance.

The hot water discharged from the heat exchanger 90 is also supplied to the temperature controllers 30a and 30b via the hot-water pump 91 and the opened on-off valve 92. Since hot water is supplied to the temperature controllers 30 in advance while the electrolyzer 100 is stopped, the temperature of the temperature controllers 30 and the electrolyte solution can be maintained at a temperature higher than the normal temperature in advance.

At this time, since the on-off valve 85 and the on-off valve 86 are closed, the cooling water supplied from the cooling tower 83 is not supplied to the temperature controller 30 and the cooler 12. Thus, the cooling water of the cooling tower 83 does not reduce the temperature of the temperature controller 30 and the electrolyte solution.

Since the on-off valve 95 is closed, no make-up water is supplied to the gas-liquid separator 20b. Since the electrolyzer 100 is in the stopped state, no electrolysis of water is performed, and water does not run short.

### [When electric energy from renewable energy is surplus]

As illustrated in Fig. 4, when electric energy from renewable energy is surplus, hydrogen is produced by the electrolyzer 100 by using the renewable energy and stored in the hydrogen storage facility 72. In such a way, the electrolyzer 100 is operated into an operating state. Since hydrogen is stored in the hydrogen storage facility 72, no hydrogen is supplied to the electric power generation 73, and the electric power generation 73 does not generate power. Thus, no exhaust gas is generated in the electric power generation 73, and no exhaust gas is supplied to the heat exchanger 90.

In such a case, under the control of the controller 50, the on-off valve 95, the on-off valve 85, and the on-off valve 86 are opened, and the on-off valve 92 is closed.

Once power is supplied from the renewable energy, the cellstack 40 of the electrolyzer 100 electrolyzes the electrolyte solution. From the cellstack 40, hydrogen and the electrolyte solution are supplied to the gas-liquid separator 20b, and the oxygen and the electrolyte solution are supplied to the gas-liquid separator 20a.

The gas-liquid separator 20b separates hydrogen and the electrolyte solution from each other, and the hydrogen is supplied to the cooler 12b. The gas-liquid separator 20a separates oxygen and the electrolyte solution from each other, and the oxygen is supplied to the cooler 12a. The electrolyte solution separated by the gas-liquid separators 20 is recirculated and supplied to the temperature controllers 30.

The temperature controllers 30 regulates the temperature of the electrolyte solution. The electrolyte solution is regulated to a rated temperature (for example, 90 °C) of the electrolyzer 100, supplied to the cellstack 40 by the circulation pumps 31, and circulated in the electrolyzer 100.

When the electrolyzer 100 is in the operating state, the cooling water from the cooling tower 83 is supplied to the temperature controller 30. Further, the cooling water is supplied from the cooling tower 83 to each cooler 12. When the electrolyzer 100 is turned from the stopped state to the operating state, the on-off valve 92 is switched from the open position to the closed position to stop the supply of hot water, and the on-off valve 85 and the on-off valve 86 are switched from the closed position to the open position to start the supply of cooling water. Together with the start of the supply of the cooling water, supply of the make-up water (hot water) to the gas-liquid separator 20b is started.

Since the electrolyte solution is circulated and electrolyzed in the cellstack 40 as described above, water is decomposed and runs short, and make-up water is thus supplied from the pure water device 81. In the embodiment of the present disclosure, hot water stored in the hot-water tank 93 is supplied to the gas-liquid separator 20b via the hot-water pump 94 and the on-off valve 95. Since the temperature of the make-up water (pure water) used as the electrolyte solution has been increased, the electrolyte solution quickly reaches the rated temperature of the electrolyzer 100. Similarly, when the electrolysis system 1 is started up, the time taken for startup can be reduced.

### <Supplementary Note>

The operation method of the electrolyzer, the controller of the electrolyzer, and the electrolysis system according to the embodiment described above are understood as follows, for example.

The operation method of the electrolyzer (100) of the first aspect of the present disclosure is an operation method of an electrolyzer including a temperature controller (30) configured to regulate a temperature of an electrolyte solution supplied to a cellstack (40), the cellstack configured to electrolyze the electrolyte solution supplied via the temperature controller, and a gas-liquid separator (20) configured to separate a gas and a liquid from each other, the gas and the liquid being generated by the cellstack, and the operation method includes: supplying hot water to the temperature controller in a case of a stopped state where the electrolyzer is stopped.

When the electrolyzer is in the stopped state, no hydrogen is produced. Thus, the temperature of the temperature controller would decrease, and it would take time to increase the temperature during the next startup. Even in the stopped state, however, hot water is supplied to the temperature controller, and thereby a reduction in temperature can be prevented. Suppression of the reduction in temperature makes it possible to quickly increase the temperature during the next startup and shorten the startup time. Furthermore, since the temperature during the operation of the overall electrolyzer is maintained, the efficiency during startup can be improved, and the electrolyzer can quickly reach the rated load and produce more hydrogen.

The operation method of the electrolyzer of the second aspect of the present disclosure, in the first aspect, may include supplying the hot water to the gas-liquid separator in a case of an operating state where the electrolyzer is operating.

When the electrolyzer is in the operating state, since hot water is supplied to the gas-liquid separator, the reduction in temperature of the electrolyte solution can be suppressed, and the efficiency in hydrogen production can be improved.

The operation method of the electrolyzer of the third aspect of the present disclosure may include, in the second aspect, performing control to supply cooling water to the temperature controller when the electrolyzer is in the operating state; and when the electrolyzer is switched from the stopped state to the operating state, switching the control so as to close an on-off valve (92) configured to supply the hot water to the temperature controller to stop supplying the hot water, open an on-off valve (85) configured to supply the cooling water to the temperature controller to start supplying the cooling water, and open an on-off valve (95) configured to supply the hot water to the gas-liquid separator to start supplying the hot water.

When the electrolyzer is in the operating state, the cooling water is supplied to the temperature controller, and the electrolyte solution is cooled. When the stopped state is switched to the operating state, that is, when the electrolyzer is started up, the control is switched such that supply of the hot water to the temperature controller is stopped, and supply of the hot water to the gas-liquid separator is started. Thus, the efficiency of the overall electrolyzer can be improved by only switching where to supply the hot water.

In the operation method of the electrolyzer of the fourth aspect of the present disclosure, in the second aspect or the third aspect, the electrolyzer may be a water electrolyzer (100), the cellstack of the water electrolyzer may generate hydrogen, and the operation method may include: storing the hydrogen in a hydrogen storage facility (72) when the water electrolyzer is in the operating state; generating power at an electric power generation (73) by using the hydrogen stored in the hydrogen storage facility when the water electrolyzer is in the stopped state; and performing control to supply the hot water to the temperature controller or the gas-liquid separator, the hot water being generated by using an exhaust gas from the electric power generation.

Since the hot water is generated by using the exhaust gas from the electric power generation and supplied to the temperature controller or the gas-liquid separator, the exhaust gas, which would otherwise be discarded, can be effectively utilized. Since the exhaust heat from the exhaust gas is utilized to generate hot water, costs required for generating the hot water can be reduced.

The operation method of the electrolyzer of the fifth aspect of the present disclosure may include, in the fourth aspect, storing the hot water in a hot-water tank (93) when the water electrolyzer is in the stopped state, the hot water being generated by using an exhaust gas from the electric power generation; and performing control to supply the hot water to the gas-liquid separator when the water electrolyzer is in the operating state, the hot water being stored in the hot-water tank,.

Since the hot water generated by using the exhaust gas from the electric power generation is stored in the hot-water tank when the water electrolyzer is in the stopped state, the exhaust gas from the electric power generation can be effectively utilized without waste. Further, since the hot water of the hot-water tank is supplied to the gas-liquid separator in the case of the operating state, costs required for generating the hot water can be reduced, and the hot water can be quickly supplied to the gas-liquid separator.

In the operation method of the electrolyzer of the sixth aspect of the present disclosure, in the fourth aspect or the fifth aspect, the electric power generation may generate power by using renewable energy and, when the renewable energy is in short supply, generate power by using the hydrogen stored in the hydrogen storage facility.

Since surplus and shortage of renewable energy can be complemented by using hydrogen stored in the hydrogen storage facility, the overall system can be stably operated. Further, since it is expected to produce hydrogen by using a surplus part of the renewable energy, the fluctuations of the renewable energy can be absorbed and effectively utilized.

The controller (50) of the electrolyzer of the seventh aspect of the present disclosure is a controller of an electrolyzer including a temperature controller configured to regulate a temperature of an electrolyte solution supplied to a cellstack, the cellstack configured to electrolyze the electrolyte solution supplied via the temperature controller, and a gas-liquid separator configured to separate a gas and a liquid from each other, the gas and the liquid being generated by the cellstack, and the controller performs control to supply hot water to the temperature controller in a case of a stopped state where the electrolyzer is stopped.

The controller of the electrolyzer of the eighth aspect of the present disclosure, in the seventh aspect, may perform control to supply the hot water to the gas-liquid separator in a case of an operating state where the electrolyzer is operating.

The controller of the electrolyzer of the ninth aspect of the present disclosure, in the eighth aspect, may perform control to supply cooling water to the temperature controller when the electrolyzer is in the operating state and switch the control so as to close an on-off valve configured to supply the hot water to the temperature controller to stop supplying the hot water, open an on-off valve configured to supply the cooling water to the temperature controller to start supplying the cooling water, and open an on-off valve configured to supply the hot water to the gas-liquid separator to start supplying the hot water when the electrolyzer is switched from the stopped state to the operating state.

The electrolysis system (1) of the tenth aspect of the present disclosure includes: an electrolyzer including a temperature controller configured to regulate a temperature of an electrolyte solution supplied to a cellstack, the cellstack configured to electrolyze the electrolyte solution supplied via the temperature controller, and a gas-liquid separator configured to separate a gas and a liquid from each other, the gas and the liquid being generated by the cellstack; a hydrogen storage facility configured to store hydrogen produced by the electrolyzer; and an electric power generation configured to generate power by using the hydrogen stored in the hydrogen storage facility, and hot water generated by using an exhaust gas from the electric power generation is supplied to the temperature controller or the gas-liquid separator of the electrolyzer.

Although hot water is generated by using exhaust heat of the exhaust gas from the electric power generation 73 in the embodiment described above, water or hot water at a higher temperature than normal temperature that is the temperature of pure water may be utilized if available. The temperature of the water or the hot water can be any temperature as long as it is a higher temperature than normal temperature that is the temperature of pure water.

### [Reference Signs List]

1, 1000 electrolysis system
11, 11a, 11b drum
12, 12a, 12b cooler
13 gas analyzer
20. 20a gas-liquid separator
30 temperature controller (LYE cooler)
31 circulation pump
40 cellstack
50 controller
60 hydrogen vent pipe
71 dryer
72 hydrogen storage facility
73 electric power generation
81 pure water device
82 pure water pump
83 cooling tower (radiator)
84 cooling water pump
85 on-off valve
86 on-off valve
90 heat exchanger
91 hot-water pump
92 on-off valve
93 hot-water tank
94 hot-water pump
95 on-off valve
100 electrolyzer (water electrolyzer)
1100 CPU
1200 secondary storage device
1300 main storage device
1500 communication unit
1800 bus

## Claims

1. An operation method of an electrolyzer, wherein the electrolyzer comprises
a temperature controller configured to regulate a temperature of an electrolyte solution supplied to a cellstack,
the cellstack configured to electrolyze the electrolyte solution supplied via the temperature controller, and
a gas-liquid separator configured to separate a gas and a liquid from each other, the gas and the liquid being generated by the cellstack,
the operation method comprising:
supplying hot water to the temperature controller when the electrolyzer is in a stopped state where the electrolyzer is stopped.

2. The operation method of the electrolyzer according to claim 1 further comprising supplying the hot water to the gas-liquid separator when the electrolyzer is in an operating state where the electrolyzer is operating.

3. The operation method of the electrolyzer according to claim 2 further comprising:
performing control to supply cooling water to the temperature controller when the electrolyzer is in the operating state; and
when the electrolyzer is switched from the stopped state to the operating state, switching the control so as to close an on-off valve configured to supply the hot water to the temperature controller to stop supplying the hot water, open an on-off valve configured to supply the cooling water to the temperature controller to start supplying the cooling water, and open an on-off valve configured to supply the hot water to the gas-liquid separator to start supplying the hot water.

4. The operation method of the electrolyzer according to claim 2,
wherein the electrolyzer is a water electrolyzer, and
wherein the cellstack of the water electrolyzer generates hydrogen,
the operation method further comprising:
storing the hydrogen in a hydrogen storage facility when the water electrolyzer is in the operating state;
generating power at an electric power generation by using the hydrogen stored in the hydrogen storage facility when the water electrolyzer is in the stopped state; and
performing control to supply the hot water to the temperature controller or the gas-liquid separator, the hot water being generated by using an exhaust gas from the electric power generation.

5. The operation method of the electrolyzer according to claim 4 further comprising:
storing the hot water in a hot-water tank when the water electrolyzer is in the stopped state, the hot water being generated by using an exhaust gas from the electric power generation; and
performing control to supply the hot water to the gas-liquid separator when the water electrolyzer is in the operating state, the hot water being stored in the hot-water tank.

6. The operation method of the electrolyzer according to claim 4, wherein the electric power generation generates power by using renewable energy and, when the renewable energy is in short supply, generates power by using the hydrogen stored in the hydrogen storage facility.

7. A controller of an electrolyzer, the electrolyzer comprising
a temperature controller configured to regulate a temperature of an electrolyte solution supplied to a cellstack,
the cellstack configured to electrolyze the electrolyte solution supplied via the temperature controller, and
a gas-liquid separator configured to separate a gas and a liquid from each other, the gas and the liquid being generated by the cellstack,
wherein the controller performs control to supply hot water to the temperature controller in case of a stopped state where the electrolyzer is stopped.

8. The controller of the electrolyzer according to claim 7, wherein the controller performs control to supply the hot water to the gas-liquid separator in a case of an operating state where the electrolyzer is operating.

9. The controller of the electrolyzer according to claim 8,
wherein the controller performs control to supply cooling water to the temperature controller when the electrolyzer is in the operating state, and
wherein when the electrolyzer is switched from the stopped state to the operating state, the controller switches the control so as to close an on-off valve configured to supply the hot water to the temperature controller to stop supplying the hot water, open an on-off valve configured to supply the cooling water to the temperature controller to start supplying the cooling water, and open an on-off valve configured to supply the hot water to the gas-liquid separator to start supplying the hot water.

10. An electrolysis system comprising:
an electrolyzer comprising
a temperature controller configured to regulate a temperature of an electrolyte solution supplied to a cellstack,
the cellstack configured to electrolyze the electrolyte solution supplied via the temperature controller, and
a gas-liquid separator configured to separate a gas and a liquid from each other, the gas and the liquid being generated by the cellstack;
a hydrogen storage facility configured to store hydrogen produced by the electrolyzer; and
an electric power generation configured to generate power by using the hydrogen stored in the hydrogen storage facility,
wherein hot water generated by using an exhaust gas from the electric power generation is supplied to the temperature controller or the gas-liquid separator of the electrolyzer.
